(19) Europäisches Patentamt
European Patent Office
Office européen des brevets

(11) Publication number: **0 024 402 B1**

(12) **EUROPEAN PATENT SPECIFICATION**

(45) Date of publication of patent specification: **29.10.86**

(51) Int. Cl.⁴: **A 01 M 1/14,** A 01 M 1/02

(21) Application number: **80900413.8**

(22) Date of filing: **28.02.80**

(86) International application number:
**PCT/GB80/00034**

(87) International publication number:
**WO 80/01748 04.09.80 Gazette 80/20**

(54) **TRAPS AND TRAPPING TECHNIQUES FOR PESTS.**

(30) Priority: **02.03.79 GB 7907470**

(43) Date of publication of application:
**11.03.81 Bulletin 81/10**

(45) Publication of the grant of the patent:
**29.10.86 Bulletin 86/44**

(84) Designated Contracting States:
**AT CH DE FR GB LU NL SE**

(56) References cited:
**CH-A- 569 403**
**CN-A-6 322 117**
**DE-A- 115 951**
**DE-A-2 448 140**
**FR-A- 333 097**
**FR-A-2 365 290**
**GB-A-1 507 696**

(73) Proprietor: **OECOS LIMITED**
**130 High Street Kimpton**
**Hitchin Hertfordshire (GB)**
(73) Proprietor: **UNIVERSITY OF SOUTHAMPTON**
**Southampton Hampshire SO9 5NH (GB)**

(72) Inventor: **DAVIES, Alan Roy**
**130 High Street Kimpton**
**Hitchin Hertfordshire (GB)**
Inventor: **MACAULEY, Ewen Duncan Macrae**
**2 Garden Fields Kimpton**
**Hitchin Hertfordshire (GB)**
Inventor: **HARRIS, George**
**Chislehurst, Winsor Estate Pelynt, Near Looe**
**Cornwall (GB)**
Inventor: **BAKER, Raymond**
**13 Woodview Close, Bassett**
**Southampton Hampshire (GB)**
Inventor: **HOWSE, Philip Edwin**
**38 Charnwood Crescent Chandlers Ford**
**Eastleigh Hampshire (GB)**
Inventor: **EVANS, David Anthony**
**57 High Street**
**Harlton, Cambridgeshire (GB)**

(74) Representative: **Britter, Keith Palmer**
**Britter & Co. 9 Alder Close**
**Baldock Hertfordshire SG7 6HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 024 402 B1

**Description**

This invention relates to traps and trapping techniques for trapping pests and is especially, but not exclusively, related to trapping crawling insects, such as cockroaches, for example, Periplaneta americana, Blatella germanica and Blatta orientalis (black beetle) or arachnid pests, such as spiders.

Cockroaches are inquisitive but very wary insects and, as a consequence, are extremely difficult to trap, particularly in sufficient numbers to substantially reduce an infesting colony. Many different types of known cockroach traps are available but are limited in their trapping efficiency due to the instinctively cautious nature of these insects.

Also it has been found that cockroaches are able to sense the presence of local electromagnetic radiation, such as an electric field, under certain circumstances, which phenomenon tends to reduce substantially the trapping efficiency of known electrical cockroach traps.

A known form of electrical trap for cockroaches and other insects is described in DE—A—2448140, wherein there is provided an insect attractant and two sets of electrical conductors associated with respective ones of a pair of spaced surfaces upon one of which insects can crawl and between both of which an electrical potential can be applied, optionally, at predetermined time intervals. This potential is sufficient to kill and, thus, dislodge any insects from the one surface into a trapping zone for receiving and retaining the dislodged and dead insects therein. Upon entry into the space between the surfaces, an insect generates a short circuit between the two sets of conductors, owing to its body moisture, and is immediately killed. However, as all the conductors on the one, insect-supporting surface, upon which an insect can crawl, are at the same potential, this one surface itself cannot be changed from a supporting to a dislodging condition. Also, this known electrical insect trap has a serious disadvantage, in that, because the potential between the two set of conductors has to be sufficiently high to kill the insects, it also tends to cause the dead insects to stick to the supporting surface and, as a consequence, to become charred. Eventually, of course, this surface becomes clogged with dead and charred insect bodies and, as a result, the trapping efficiency of the trap is considerably reduced.

In FR—A—2365290, there is disclosed a mechanical trap for cockroaches and similar insects comprising a see-saw arrangement having a pivotable surface which is accessible to insects and which can be either in a stationary insect-supporting position or in an inclined, insect-dislodging position, and a liquid-filled trapping receptacle into which insects, dislodged from the inclined surface, fall and in which they are killed. In this known trap, it is the presence of an insect on the pivotable surface which moves the surface from its supporting to its inclined dislodging position, in which case, it can be said that this trap is insect-operated. One disadvantage of this operation is that, generally speaking, only one insect is trapped at any one time and the opportunity of trapping other insects is missed when the surface is in the inclined position.

Another prior art insect trap, used mainly for trapping flies, is described in Chinese Patent Application 6322117, wherein a multi-sided drum is rotated about its axis at a given speed, such that each side is moved from an exposed, insect-supporting position to an insect-dislodging position within a closed storage chamber in which the dislodged insect is trapped. Easch side of the drum is coated with an attractant to lure insects thereonto. However, the continuous rotation of the drum and the consequential movement of the sides in the exposed position tends to frighten away any insects which might otherwise alight on a stationary attractant-coated side.

The invention as claimed is intended to overcome the disadvantages associated with previously known insect or pest traps, as discussed above.

Also, the present invention is intended to provide a method for trapping pests, say, insects, such as cockroaches, in sufficiently large numbers to substantially reduce an infesting colony.

Furthermore, the invention is intended to provide a trap for trapping pests which is comparatively simple and economical to manufacture, which can be easily transported and handled, and which eliminates the disadvantages, such as the low trapping efficiencies, associated with known traps.

In accordance with one aspect of the invention, there is provided a method for trapping pests in a trap having an inwardly-extending and downwardly-inclined surface which is in the form of an electrically-insulating panel upon whose upper surface are disposed spaced conductors, which is located above an associated trapping zone, which is accessible to pests, and which is changeable electrically between a pest-supporting condition and a pest-dislodging condition, the method comprising the steps of changing electrically the surface alternately between the pest-supporting and pest-dislodging conditions at predetermined time intervals, whereby any pest received and supported on the surface is dislodged into the trapping zone, and retaining any such dislodged pest in the trapping zone, characterised in that the step of changing electrically the surface from the pest-supporting condition to the pest-dislodging condition is effected by applying an electrical potential to alternate ones of the strip conductors on the upper surface of the electrically-insulating panel, the electrical potential being sufficient only to dislodge the pests from the surface without the pests being killed.

In accordance with another aspect of the invention, there is provided a pest trap comprising an inwardly-extending and downwardly-inclined surface which is in the form of an electrically-insulating panel upon whose upper surface are disposed spaced conductors, which is located above and associated trapping zone, which is accessible to pests, and which can be changed electrically between alternate pest-supporting and pest-dislodging conditions at predetermined time intervals, whereby any pest received and supported on the surface is dislodged into the trapping zone and retained therein, characterised in that for the electrical changing of the surface from the pest-supporting to the pest-dislodging condition it comprises means for applying an electrical potential to alternate ones of the strip conductors on the upper surface of the electrically-insulating panel, with the electrical potential being sufficient only to dislodge the pests from the surface without the pests being killed.

An attractant may be used to lure the insect or other pest on to the surface. Such an attractant could be in the form of food or, in the case of an insect, such as a cockroach, a pheromone attractant could be used.

In order that the invention may be more fully understood, a preferred form of cockroach trap will now be described by way of example and with reference to the accompanying drawing which shows a cross-sectional elevation of the trap.

As shown in the drawing, a cockroach trap comprises a substantially triangularly cross-sectioned housing 1, with opposed inclined surfaces 6 each leading to a respective, inwardly extending and downwardly inclined, cockroach-receiving surface formed from an electrically insulating panel 2 upon whose upper surface are located spaced, parallel strip conductors 3. Beneath the lower edges of the panels 2 is located a trapping zone in the form of a removable tray 4 with a sticky insert 5 positioned therein.

The conductors 3 are connected to an electrical multivibrator circuit (not shown) housed in the upper portion 7 of a cover 8 for the trap. Between the cover and surfaces 6 is defined a gap along which cockroaches can crawl to the inwardly extending and downwardly inclined surfaces. The multivibrator circuit causes alternate conductors 3 to be pulsed for a period of not more than 1 second, at predetermined time intervals of 10 seconds, with 300—400 volts DC. However, alternate conductors 3 can be pulsed with voltages of 100 volts to 1 kilovolt at predetermined time intervals of 1 second to 1 minute, but preferably 10 seconds to 30 seconds, depending upon the type of cockroach to be trapped, the infestation and such other factors that need to be taken into consideration to obtain maximum trapping efficiency. It has been found that the preferred operating voltage is from 300 volts to 500 volts.

In operation of the trap, any suitable cockroach attractant, such as a synthetic pheromone, is located between the two panels 2 at the centre of the trap. Any cockroaches in the vicinity of the trap will be lured by the attractant and crawl up one of the opposed sides under the cover 8 and on to the respective cockroach-receiving surface provided by the panel 2 and conductors 3. It will be appreciated that the 300—400 volt DC pulses are spaced by 10 second intervals in order to permit as many cockroaches as possible to collect on the panels 2 between pulses.

As the conductors 3 are pulsed with 300—400 volts DC, the cockroaches on the panel 2 are dislodged by the consequential current flow that is provided between adjacent conductors and fall into the tray 4 where they stick to the insert 5. Subsequently, the tray 4 can be removed from the trap so that the insert 5, with the cockroaches stuck thereon, may be removed from the tray for disposal.

It is to be understood that other suitable trapping zones, instead of the removable tray and sticky insert, could be used, for instance, a box or cage.

Also, it should be appreciated that the pulsing of the surface from the pest-supporting condition to the pest-dislodging condition is not intended to kill the pests but merely to dislodge them from the surface into the trapping zone where they subsequently die or where they are removed for extermination and disposal. Although the trap has been described in relation to the substantial reduction of an infesting pest colony, it can also be used for monitoring purposes.

Suitable synthetic pheromone attractants for luring certain types of cockroach on the dislodging surfaces of the trap are listed as follows:

Periplaneta americana

Germacrene D; 1-methyl-5-methylene-8-(2-propyl)-cyclodeca-E,1-E,6-diene:

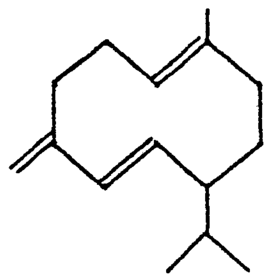

or periplanone-B; 8-methylene-5-(2-propyl)-11-oxabicyclo[8,1,0]undec-E,6-en-3-one-2-spirooxiran:

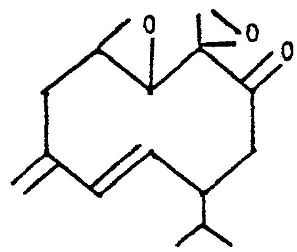

Blatella germanica

Propyl cyclohexylacetate of the formula:

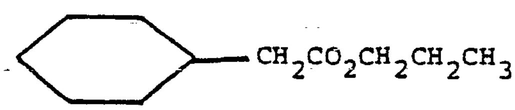

or 3,11-dimethyl-2-nonacosanone of the formula:

$$CH_3(CH_2)_{17}-\overset{\overset{CH_3}{|}}{C}H-(CH_2)_7-\overset{\overset{CH_3}{|}}{C}H-COCH_3$$

The particular attractant is provided in the trap in a bung or phial 9 which is supported between the surfaces, as shown in dashed outline in the drawing.

The trap can be made in any size, according to the size of the pest to be trapped therein.

Connections between the conductors 3 and associated circuitry in the upper portion of the cover may be in the form of a plug and socket connector, such a connection having a safety arrangement, whereby, when the cover is removed, the high voltage circuit is isolated from its mains supply and also cannot be touched by an operator.

**Claims**

1. A method of trapping pests in a trap having an inwardly-extending and downwardly-inclined surface (2, 3) which is in the form of an electrically-insulating panel (2) upon whose upper surface are disposed spaced conductors (3), which is located above an associated trapping zone (4, 5), which is accessible to pests, and which is changeable electrically between a pest-supporting condition and a pest-dislodging condition, the method comprising the steps of changing electrically the surface (2, 3) alternately between the pest-supporting and pest-dislodging conditions at predetermined time intervals, whereby any pest received and supported on the surface (2, 3) is dislodged into the trapping zone (4, 5), and retaining any such dislodged pest in the trapping zone (4, 5), characterised in that the step of changing electrically the surface (2, 3) from the pest-supporting condition to the pest-dislodging condition is effected by applying an electrical potential to alternate ones of the strip conductors (3) on the upper surface of the electrically-insulating panel (2), the electrical potential being sufficient only to dislodge the pests from the surface (2, 3) without the pests being killed.

2. A method as claimed in claim 1, wherein the surface (2, 3) is maintained in the pest-dislodging condition for a predetermined period of time.

3. A method as claimed in claim 1 or 2, wherein the electric potential is applied between alternate electrical conductors (3) at a predetermined time interval of 1 second to 1 minute.

4. A method as claimed in claim 3, wherein the predetermined time interval is 10 seconds to 30 seconds.

5. A method as claimed in any preceding claim, wherein the electric potential applied to alternate electrical conductors (3) is 100 volts to 1 kilovolt.

6. A method as claimed in claim 5, wherein the potential is 300 to 500 volts.

7. A method as claimed in claim 2 or in any of claims 3 to 6, when dependent upon claim 2, wherein the electrical potential is applied to the electric conductors (3) for a predetermined period of time of not greater than 1 second.

8. A method as claimed in any preceding claim, wherein a pest attractant (9) is provided.

9. A method as claimed in any preceding claim, wherein the pest is a crawling insect or an arachnid pest.

10. A method as claimed in claim 9, wherein the crawling insect or arachnid pest is attracted to the surface (2, 3) by a pheromone (9).

11. A pest trap comprising an inwardly-extending and downwardly-inclined surface (2, 3) which is in the form of an electrically-insulating panel (2) upon whose upper surface are disposed spaced conductors (3), which is located above an associated trapping zone (4, 5), which is accessible to pests, and which can be changed electrically between alternate pest-supporting and pest-dislodging conditions at predetermined time intervals, whereby any pest received and supported on the surface (2, 3) is dislodged into the trapping zone (4, 5) and retained therein, characterised in that for the electrical changing of the surface (2, 3) from the pest-supporting to the pest-dislodging condition it comprises means for applying an electrical potential to alternate ones of the strip conductors (3) on the upper surface of the electrically-insulating panel (2), with the electrical potential being sufficient only to dislodge the pests from the surface (2, 3) without the pests being killed.

12. A trap as claimed in claim 11, wherein the electric potential can be applied between alternate electrical conductors (3) at a predetermined time interval of 1 second to 1 minute.

13. A trap as claimed in claim 12, wherein the predetermined time interval is 10 seconds to 30 seconds.

14. A trap as claimed in claim 11, 12 or 13, wherein the electric potential is 100 volts to 1 kilovolt.

15. A trap as claimed in claim 14, wherein the potential is 300 volts to 500 volts.

16. A trap as claimed in any of claims 11 to 15, wherein the electric potential is applied to alternate electrical conductors (3) for a predetermined time period of not greater than 1 second.

17. A trap as claimed in any of claims 11 to 16 having a pest attractant (9) associated therewith.

18. A trap as claimed in claim 17 for crawling insects or arachnid pests, wherein the attractant (9) is a pheromone.

19. A trap as claimed in any of claims 11 to 18, having a housing of substantially triangular cross-section with opposed inclined surfaces (6) each leading to a respective surface (2, 3).

**Patentansprüche**

1. Ein Verfahren zum Fangen von Schädlingen in einer Falle, die eine sich nach innen erstreckende und nach unten geneigte Fläche (2, 3) aufweist, die die Form einer elektrisch isolierenden Platte (2) besitzt, auf deren oberer Fläche im Abstand voneinander angeordnete Leiter (3) vorgesehen sind, welche Platte oberhalb einer ihr zugeordneten Fangzone (4, 5) angeordnet ist, die für Schädlinge zugänglich ist, und die elektrisch zwischen einem schädlingstragenden Zustand und einem schädlingsverlagernden Zustand veränderbar ist, wobei das Verfahren die Schritte der elektrischen Veränderung der Fläche (2, 3) abwechselnd zwischen den schädlingstragenden und schädlingsverlagernden Zuständen in vorgegebenen Zeitabständen umfaßt, wodurch jeder Schädling, der von der Fläche (2, 3) aufgenommen und getragen wird, in die Fangzone (4, 5) verlagert wird und jeder so verlagerte Schädling in der Fangzone (4, 5) festgehalten wird, dadurch gekennzeichnet, daß der Schritt der elektrischen Veränderung der Fläche (2, 3) vom schädlingstragenden Zustand zum schädlingsverlagernden Zustand durch das Anlegen einer elektrischen Spannung an abwechselnde der Streifenleiter (3) auf der oberen Fläche der elektrisch isolierenden Platte (2) bewirkt wird, wobei die elektrische Spannung nur dazu ausreicht, die Schädlinge von der Fläche (2, 3) zu verlagern, ohne daß die Schädlinge getötet werden.

2. Ein Verfahren nach Anspruch 1, worin die Fläche (2, 3) für eine vorgegebene Zeitdauer im schädlingsverlagernden Zustand gehalten wird.

3. Ein Verfahren nach Anspruch 1 oder 2, worin die elektrische Spannung zwischen abwechselnden elektrischen Leitern (3) in einem vorgegebenen Zeitinervall von 1 Sekunde bis 1 Minute angelegt wird.

4. Ein Verfahren nach Anspruch 3, worin das vorgegebene Zeitintervall 10—30 Sekunden baträgt.

5. Ein Verfahren nach einem der vorhergehenden Ansprüche, worin die elektrische Spannung, die an abwechselnde elektrische Leiter (3) angelegt wird, 100 Volt bis 1 Kilovolt beträgt.

6. Ein Verfahren nach Anspruch 5, worin die Spannung 300—500 Volt beträgt.

7. Ein Verfahren nach Anspruch 2 oder einem der Ansprüche 3—6, wenn auf Anspruch 2 rückbezogen,

worin die elektrische Spannung an die elektrischen Leiter (3) für eine vorgegebene Zeitdauer von nicht mehr als einer Sekunde angelegt wird.

8. Ein Verfahren nach einem der vorhergehenden Ansprüche, worin ein Schädlings-Lockstoff (9) vorgesehen ist.

9. Ein Verfahren nach einem der vorhergehenden Ansprüche, worin der Schädling ein kriechendes Insekt oder ein Schädling von der Gattung der Arachniden, d.h. der Spinnentiere, ist.

10. Ein Verfahren nach Anspruch 9, worin das kriechende Insekt oder der Schädling von der Gattung der Arachniden an die Fläche (2, 3) mittels eines Pheromons (9) angelockt wird.

11. Eine Schädlingsfalle umfassend eine sich nach innen erstreckende und nach unten geneigte Fläche (2, 3), die die Form einer elektrisch isolierenden Platte (2) besitzt, auf deren oberer Fläche im Abstand voneinander angeordnete Leiter (3) angebracht sind und die oberhalb einer zugeordneten Fangzone (4, 5) angeordnet ist, die für Schädlinge zugänglich ist, und die elektrisch in vorgegebenen Zeitintervallen abwechselnd zwischen schädlingstragenden und schädlingsverlagernden Zuständen veränderbar ist, wodurch jeder Schädling, der von der Fläche (2, 3) aufgenommen und getragen wird, in die Fangzone (4, 5) verlagert und darin festgehalten wird, dadurch gekennzeichnet, daß sie zur elektrischen Varänderung der Fläche (2, 3) vom schädlingstragenden zum schädlingverlagernden Zustand eine Einrichtung zum Anlegen einer elektrischen Spannung an abwechselnde der Streifenleiter (3) an der oberen Fläche der elektrisch isolierenden Platte (2) umfaßt, wobei die elektrische Spannung nur dazu ausreicht, um die Schädlinge von der Fläche (2, 3) zu verlagern, ohne daß die Schädlinge getötet werden.

12. Eine Falle nach Anspruch 11, worin die elektrische Spannung zwischen abwechselnden elektrischen Leitern (3) in einem vorgegebenen Zeitintervall von 1 Sekunde bis 1 Minute angelegt werden kann.

13. Eine Falle nach Anspruch 12, worin das vorgegebene Zeitintervall 10—30 Sekunden beträgt.

14. Eine Falle nach Anspruch 11, 12 oder 13, worin die elektrische Spannung 100 Volt bis 1 Kilovolt beträgt.

15. Eine Falle nach Anspruch 14, worin die Spannung 300—500 Volt beträgt.

16. Eine Falle nach einem der Ansprüche 11—15, worin die elektrische Spannung an abwechselnde elektrische Leiter (3) für eine vorgegebene Zeitdauer von nicht mehr als 1 Sekunde angelegt wird.

17. Eine Falle nach einem der Ansprüche 11—16, der ein Lockstoff (9) für die Schädlinge zugeordnet ist.

18. Eine Falle nach Anspruch 17 für kriechende Insekten oder Schädlinge der Gattung der Arachniden, worin der Lockstoff (9) ein Pheromon ist.

19. Eine Falle nach einem der Ansprüche 11—18, mit einem Gehäuse von im wesentlichen dreieckigem Querschnitt mit gegenüberliegenden geneigten Flächen (6), von denen jede zu einer jeweiligen Fläche (2, 3) führt.

**Revendications**

1. Méthode de piégeage d'arthropodes nuisibles dans un piège ayant une surface (2, 3) qui s'étend vers l'intérieur et est inclinée vers le bas, qui présente la forme d'un panneau isolant électrique (2) sur la surface supérieure duquel sont disposés des conducteurs espacés (3), qui est située au-dessus d'une zone associée de piégeage (4, 5), qui est accessible aux arthropodes nuisibles, et qui peut changer d'état électrique, entre un état de support de l'arthropode nuisible et un état d'élimination de l'arthropode nuisible, la méthode consistant à changer alternativement l'état électrique de la surface (2, 3), entre l'état de support de l'arthropode nuisible et l'état d'élimination de l'arthropode nuisible, à des intervalles de temps prédéterminés, tout arthropode nuisible collecté et porté par la surface (2, 3) étant ainsi éliminé dans la zone de piégeage (4, 5), et à retenir tout arthropode nuisible ainsi éliminé dans la zone de piégeage (4, 5) caractérisé par le fait que le changement de l'état électrique de la surface (2, 3), de l'état de support de l'arthropode nuisible à l'état d'élimination de l'arthropode nuisible, est effectué par application d'un potentiel électrique à des bandes alternées des bandes conductrices (3) sur la surface supérieure du panneau isolant électrique (2), le potentiel électrique étant suffisant pour seulement éliminer les arthropodes nuisibles de la surface (2, 3) sans que les arthropodes nuisibles soient tués.

2. Méthode selon la revendication 1, dans laquelle la surface (2, 3) est maintenue dans l'état d'élimination de l'arthropode nuisible durant une période de temps prédéterminée.

3. Méthode selon la revendication 1 ou 2, dans laquelle le potential électrique est appliqué entre conducteurs électriques alternés (3) à un intervalle de temps prédéterminé de 1 seconde à 1 minute.

4. Méthode selon la revendication 3, dans laquelle l'intervalle de temps prédéterminé est de 10 secondes à 30 secondes.

5. Méthode selon n'importe laquelle des revendications précédentes, dans laquelle le potentiel électrique appliqué aux conducteurs électriques alternés (3) est de 100 Volts à 1 kiloVolt.

6. Méthode selon la revendication 5, dans laquelle le potentiel est de 300 à 500 Volts.

7. Méthode selon la revendication 2 ou n'importe laquelle des revendications 3 à 6, lorsqu'elle dépend de la revendication 2, dans laquelle le potentiel électrique est appliqué aux conducteurs électriques 3 pour une période de temps prédéterminée de maximum 1 seconde.

8. Méthode selon n'importe quelle revendication précédente, dans laquelle un appât (9) pour arthropode nuisible est prévu.

9. Méthode selon n'importe quelle revendication précédente, dans laquelle l'arthropode nuisible est un insecte rampant ou un arachnide nuisible.

10. Méthode selon la revendication 9, dans laquelle l'insecte rampant ou l'arachnide nuisible est attiré vers la surface (2, 3) par une phéromone (9).

11. Piège à arthropode nuisible, comprenant une surface (2, 3) qui s'étend vers l'intérieur et est inclinée vers le bas, qui se présente sous la forme d'un panneau isolant électrique (2) sur la surface supérieure duquel sont disposés des conducteurs espacés (3), qui est située au-dessus d'une zone associée de piégeage (4, 5), qui est accessible aux arthropodes nuisibles, et dont l'état électrique peut être alternativement changé entre un état de support de l'arthropode nuisible et d'élimination de l'arthropode nuisible, à des intervalles de temps prédéterminés, tout arthropode nuisible collecté et porté par la surface (2, 3) étant ainsi éliminé dans la zone de piégeage (4, 5) et y étant retenu, caractérisé par le fait que pour le changement de l'état électrique de la surface (2, 3) de l'état de support l'arthropode nuisible à celui d'élimination de l'arthropode nuisible, il comprend des moyens pour appliquer un potentiel électrique à des bandes alternées des bandes conductrices (3) sur la surface supérieure du panneau isolant électrique (2), le potentiel électrique étant suffisant pour seulement éliminer les arthropodes nuisibles de la surface (2, 3) sans que les arthropodes nuisibles soient tués.

12. Piège selon la revendication 11, dans lequel le potentiel électrique peut être appliqué entre des conducteurs électriques alternés (3) à un intervalle de temps prédéterminé de 1 seconde à 1 minute.

13. Piège selon la revendication 12, dans lequel l'intervalle de temps prédéterminé est de 10 secondes à 30 secondes.

14. Piège selon la revendication 11, 12 ou 13, dans lequel le potentiel électrique est de 100 Volts à 1 kiloVolt.

15. Piège selon la revendication 14, dans lequel le potentiel est de 300 Volts à 500 Volts.

16. Piège selon n'importe laquelle des revendications 11 à 15, dans lequel le potentiel électrique est appliqué à des conducteurs électriques alternés (3) durant une période de temps de maximum 1 seconde.

17. Piège selon n'importe laquelle des revendications 11 à 16, associé à un appât (9) pour arthropode nuisible.

18. Piège selon la revendication 17, pour des insectes rampants ou des arachnides nuisibles, dans lequel l'appât (9) est une phéromone.

19. Piège selon n'importe laquelle des revendications 11 à 18, ayant un logement de section essentiellement triangulaire avec des faces opposées inclinées (6), chacune conduisant à une surface correspondantee (2, 3).

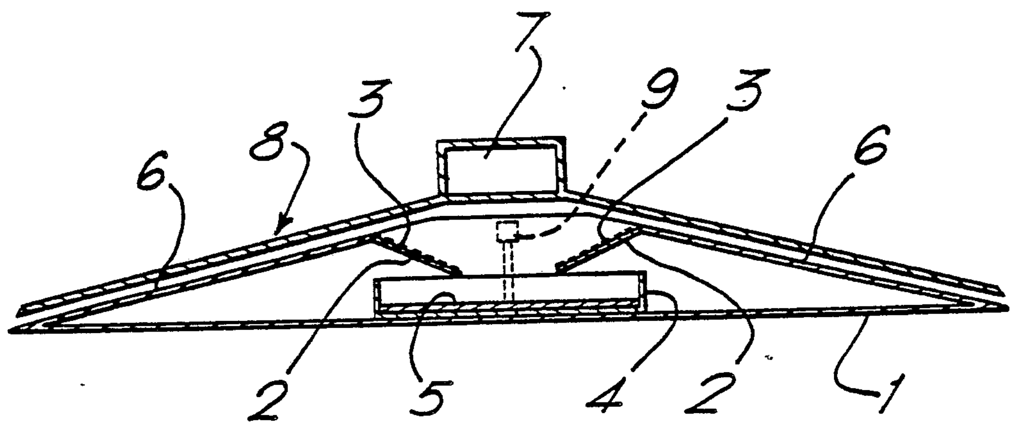
7
9
3
3
8
6
6
2
5
4
2
1